Europäisches Patentamt

European Patent Office

Office européen des brevets

(19)

(11) Veröffentlichungsnummer : **0 470 931 A2**

## (12) EUROPÄISCHE PATENTANMELDUNG

(21) Anmeldenummer : **91810605.5**

(51) Int. Cl.$^5$ : **C02F 1/28,** C02F 1/44

(22) Anmeldetag : **30.07.91**

(30) Priorität : **08.08.90 CH 2583/90**

(43) Veröffentlichungstag der Anmeldung :
**12.02.92 Patentblatt 92/07**

(84) Benannte Vertragsstaaten :
**AT BE CH DE DK ES FR GB IT LI NL SE**

(71) Anmelder : **CIBA-GEIGY AG
Klybeckstrasse 141
CH-4002 Basel (CH)**

(72) Erfinder : **Thüer, Markus, Dr.
Schwalbenweg 2
CH-4310 Rheinfelden (CH)**
Erfinder : **Strübin, Thomas, Dr.
Hintergasse 41
CH-4416 Bubendorf (CH)**
Erfinder : **Teschner, Walter
Hinter Gärten 7
CH-4125 Riehen (CH)**
Erfinder : **Horisberger, Hans
Gartenstrasse 109
CH-4132 Muttenz (CH)**

(54) **Grund- und Abwasserreinigung.**

(57)   Beschrieben wird ein Verfahren zur Reinigung von Grund- und Abwässern das dadurch gekennzeichnet ist, dass die Wässer zwischen einer biologischen Reinigungsstufe und dem Überleiten über Aktivkohle einem Membran-Trenn- Verfahren unterworfen wird.

EP 0 470 931 A2

Jouve, 18, rue Saint-Denis, 75001 PARIS

Die vorliegende Erfindung betrifft ein neues Verfahren zur Reinigung von Grund- und Abwässern, sowie eine Vorrichtung zur Durchführung des Verfahrens.

Der Einsatz von Aktivkohle zur Entfernung von Spuren das Wasser belastender Stoffe, insbesondere organischer Stoffe, ist bekannt. Die Adsorption an Aktivkohle ist jedoch unökonomisch, um grössere Mengen Schadstoffe abzuscheiden, weshalb Wässer, die grosse Mengen biologisch-abbaubare Organika enthalten zuerst einer biologischen Reinigungsstufe unterworfen werden. Die nach der biologischen Reinigungsstufe verbleibenden refraktären Stoffe werden dann durch eine Adsorption an Aktivkohle bis in den Spurenbereich entfernt.

Durch obige Abfolge von biologischer Reinigungsstufe und Adsorption an Aktivkohle sollten sich im Prinzip Grund- und Abwässer verschiedenster Herkunft reinigen lassen. Der Begriff Grund- und Abwasser umfasst somit z. B. Grundwasser, Oberflächenwasser, Deponiesickerwasser, häusliches Abwasser, konzentriertes Abwasser, Prozessabwasser, Industrieabwasser sowie Gemische dieser Wässer

Infolge des biologischen Abbaus der Schadstoffe befinden sich am Ausgang des Bioreaktors grössere Mengen Fest- oder Trübstoffe im Wasser. Es handelt sich hierbei vor allem um Biomasse. Üblicherweise werden diese suspendierten Teilchen durch eine Flockung und/oder Sandfiltration abgetrennt. Neben dem Vorteil des vergleichsweise preiswerten Betreibens eines solchen Sandfilters, weisen Filter dieser Art jedoch folgende Hauptnachteile auf:
– die abzuscheidenden Partikel müssen flockungsfähig sein und
– die Konzentration der Partikel darf nicht zu hoch sein.

Für normale häusliche Abwässer sind obige Bedingungen erfüllt und durch eine Sedimentation bzw. Sandfiltration kann genug Biomasse zurückgehalten werden, um die anschliessende Aktivkohleadsorption durchführen zu können.

Nicht mehr sinnvoll ist eine Sandfiltration aber bei stark schwankendem Verschmutzungsgrad des Wassers, oder stark schwankender Zusammensetzung der Schadstoffe im Wasser, oder auch bei erhöhten und schwankenden Salzkonzentrationen ( 15-100 g/l) im Wasser. Dann ist eine Flockung der Feststoffe nach der biologischen Reinigungsstufe, auch mittels Flockungsmitteln schwierig oder zeitweise gar nicht möglich.

Aufgabe der vorliegenden Erfindung war die Bereitstellung eines Verfahrens mit dem sich die Nachteile der Sandfiltration überwinden lassen, welches für den angesprochenen weiten Bereich verunreinigter Wässer geeignet ist, welches grosstechnisch anwendbar ist und welches die Reinigungsleistung der Aktivkohleadsorption verbessert.

Überraschenderweise lassen sich die oben skizzierten Aufgaben lösen und darüberhinaus die Abbauleistung der biologischen Stufe in bestimmten Fällen noch steigern durch ein Verfahren zur Reinigung von Grund- und Abwässern, das dadurch gekennzeichnet ist, dass die Wässer zwischen einer biologischen Reinigungsstufe und dem Überleiten über Aktivkohle einem Membran-Trenn-Verfahren unterworfen werden.

Für die biologische Reinigungsstufe lassen sich prinzipiell alle biologischen Reinigungs- und Abbauverfahren einsetzen. Die Verfahren können aerob oder anaerob durchgeführt werden. Bevorzugt handelt es sich um sogenannte Trägerbiologien d.h. die Biomasse ist in einem Fliess- oder Festbett-Reaktor auf einem Trägermaterial mit grosser Obefläche z.B. Kunststoffkörpern fixiert.

Unter Membran-Trenn-Verfahren wird im folgenden eine Trennoperation z.B. Umkehrosmose, Ultrafiltration und/oder Mikrofiltration verstanden, bei der eine Membran (Flach- oder Rohrmembran) verwendet wird, deren Porengrösse zwischen 0,001 μm und 10 μm, bevorzugt zwischen 0,02 μm und 10 μm und besonders bevorzugt zwischen 0,2 μm und 0,5 μm, liegt. Hierbei sind für den Fall der Mikrofiltration zwei unterschiedliche Vorgehensweisen möglich, einmal eine statische Filtration und zum zweiten eine dynamische Filtration, welche bevorzugt ist. Statische Filtrationen werden auch als "dead end" Filtrationen bezeichnet und eignen sich besonders zum Entfernen geringer Feststoffmengen. Die dynamische Filtration kann hingegen groessere Mengen Feststoffe kontinuierlich entfemen, sie werden im sogenannten Konzentrat abgeführt. Die dynamische Filtration wird beispielsweise als tangentiale Querstromfiltration bei Überströmgeschwindigkeiten von 0,5-8 m/s und bei Systemdrücken von 2-10 bar durchgeführt. Die Abtrennung der Feststoffe kann soweit geführt werden, wie das Konzentrat noch fliessfähig ist. Das Konzentrat kann dann dem Rohwasserzulauf beigegeben werden (Recyclierung). Zur Erhaltung genügender Filtrationsleistungen ist es im allgemeinen nötig periodische Rückspülungen durchzuführen.

Es wurde nun gefunden, dass das geschilderte Membran-Trenn-Verfahren nicht nur die bisher übliche Sandfiltration ersetzen kann, sondern darüberhinaus weitere wesentliche Vorteile bietet. So werden, insbesondere im besonders bevorzugten Porengrössenbereich, Mikroorganismen vollständig zurückgehalten, sie gelangen nicht in die anschliessende Aktivkohleadsorptionsstufe. Hierdurch wird die Standzeit der Aktivkohle wesentlich verlängert, da es nicht zum unerwünschten Biomasse-Wachstum auf der Kohle kommt. Solches Wachstum kann zu Geruchsbelästigungen und Toxizitätsproblemen führen; auch kann bei langen Standzeiten das Kohlefilter verstopfen. Der Rückhalt der Mikroorganismen ist selbst bei Konzentrationen dieser von mehreren g/l gesichert. Vorteilhaft ist weiterhin, dass Mikroorganismen nach der Abscheidung an der Membran wieder der biologischen Stufe zugeführt werden können, da das Konzentrat des Membran-Trenn- Verfahrens dem Rohwasserzulauf zugegeben werden kann. Von besonderem Interesse ist hierbei, dass schlecht fixierte oder aber auch spezialisierte Mikroorganismen nicht für die biologische Stufe verloren gehen, sondern recycliert werden können. Es resultiert hieraus gegebenenfalls eine bessere Abbauleistung der biologischen Stufe.

Es besteht zudem die Möglichkeit die so gereinigten Abwässer ein oder mehrmals dem Bioreaktor wieder zuzuführen, um einen vollständigen Kreislauf des Brauchwassers zu erreichen. Gegebenenfalls kann auch ein Teil des Brauchwassers durch Frischwasser ersetzt werden. Diese Kreislaufführung ist vor allem bei Fabrikationsabwässern von Interesse.

Die Vorrichtung zur Durchführung des obigen Verfahrens besteht aus einer Kombination einer biologischen Reinigungsstufe (Bioreaktor), einer Einheit für das Membran-Trenn- Verfahren und einer Aktivkohleadsorption (Aktivkohlefilter). Die einzelnen Vorrichtungen können dabei auch mehrfach z.B. parallel oder in Reihe ausgeführt sein. Die einzelnen Vorrichtungen sind jeweils für sich alleine genommen bekannt, erst die erfindungsgemässe Kombination in der angegebenen Art führt jedoch zu den geschilderten Vorteilen.

Das folgende Beispiel erläutert die Erfindung, ohne sie jedoch zu limitieren.

Beispiel:

Das zu behandelnde Industrie-Abwasser weist einen TOC- (total organic carbon) Gehalt von ca. 2000 mg/l und einen Salzgehalt von 20'000-40'000 mg/l auf, daneben enthält es einige mg/l bioaktive, nicht abbaubare Substanzen.

Ungelöste Stoffe werden vorgängig abgetrennt.

Die biologische Reinigung erfolgt in einer Kolonne (0,5 m Durchmesser, 4 m Höhe), welche zu 80 Vol.% mit einer Kunststoffpackung (ca. 200 m²/m³ Oberfläche) gefüllt ist. Die Mikroorganismen zum Animpfen stammen aus Bioschlamm von ähnlichen Reaktoren. Zum besseren Abbau wird unten am Reaktor Luft eingeblasen. Die Abbaurate beträgt über 95 %. Die aus dem Abbau resultierende Biomasse (vorwiegend Bakterien) bleibt teilweise an der Packungsoberfläche haften, teilweise wird sie als feiner Schlamm kontinuierlich aus dem Reaktor ausgespült. Die Gesamtmenge ungelöster Stoffe am Ausgang des Bioreaktors beträgt 500-2000 mg/l (bestimmt nach Schweizer Einheitsmethoden zur Wasseruntersuchung).

Der Ablauf der biologischen Reinigung wird mit ca. 3 bar Überdruck durch eine Querstrom-Mikrofiltrationseinheit geleitet, die mit einer anorganischen Membran (nominelle Porenweite 0,2 µm) bestückt ist. Ca. 90 % des Wassers passieren die Membran der Rest wird als Konzentrat zurückgehalten und in den Rohwasserzulauf zurückgeführt.

Um die Filtrationsleistung von ca. 60 l/m²h aufrechtzuerhalten, wird in Abständen von ca. 10-30 Minuten ein kurzer Gegendruckstoss angewendet, der die Fliessrichtung durch die Membran kurzfristig umdreht, ohne dass der Gesamtprozess unterbrochen wird. Die Reinigung der Membran kann durch Javell-Lauge im Abstand einiger Wochen erfolgen.

Das Wasser, das die Membran passiert hat weist 0 mg/l ungelöste Stoffe auf und ist steril, was ausschliesst, dass im nachfolgenden Schritt die Aktivkohle durch Mikroorganismen angeimpft wird.

Den letzten Reinigungsschritt bildet die Aktivkohle-Adsorption in einem Festbett-Adsorber, Kontaktzeit etwa 1 h.

Der TOC-gehalt, des so gereinigten Abwassers beträgt 20- 100 mg/l; bioaktive, nicht abbaubare Substanzen lassen sich keine mehr nachweisen.

**Patentansprüche**

1. Verfahren zur Reinigung von Grund- und Abwässern, dadurch gekennzeichnet, dass die Wässer zwischen einer biologischen Reinigungsstufe und dem Überleiten über Aktivkohle einem Membran-Trenn- Verfahren unterworfen wird.

2. Verfahren zur Reinigung von Grund- und Abwässern gemäss Anspruch 1, dadurch gekennzeichnet, dass eine Filtration mit einer Membran erfolgt, deren Porengrösse 0,001 µm bis 10 µm beträgt.

3. Verfahren zur Reinigung von Grund- und Abwässern gemäss Anspruch 1, dadurch gekennzeichnet, dass eine Umkehrosmose, eine Ultrafiltration und/oder eine Mikrofiltration mit einer Membran erfolgt, deren Porengrösse 0,001 µm bis 10 µm beträgt.

3

4. Verfahren zur Reinigung von Grund- und Abwässern gemäss Anspruch 1, dadurch gekennzeichnet, dass eine Mikrofiltration mit einer Membran erfolgt, deren Porengrösse 0,02 µm bis 10 µm beträgt.

5. Verfahren zur Reinigung von Grund- und Abwässern gemäss Anspruch 1, dadurch gekennzeichnet, dass die Mikrofiltration mit einer Membran erfolgt, deren Porengrösse 0,2 µm bis 0,5 µm beträgt.

6. Verfahren zur Reinigung von Grund- und Abwässern gemäss Anspruch 5, dadurch gekennzeichnet, dass die Mikrofiltration als dynamische, tangentiale Querstromfiltration durchgeführt wird, wobei gegebenenfalls das Konzentrat recycliert wird.

7. Verfahren zur Reinigung von Grund- und Abwässern gemäss Anspruch 1, dadurch gekennzeichnet, dass die Wässer zwischen einer biologischen Reinigungsstufe, welche mit Hilfe einer Trägerbiologie in einem Festbettreaktor erfolgt, und dem Überleiten über Aktivkohle einer dynamischen, tangentialen Querstrom-Mikrofiltration mit einer Membran, deren Porengrösse 0,2 µm bis 0,5 µm beträgt, unterworfen werden, wobei das Konzentrat recycliert wird.

8. Verfahren zur Reinigung von Grund- und Abwässern gemäss Anspruch 1, dadurch gekennzeichnet, dass das gereinigte Abwassser ganz oder teilweise wieder zurückgeführt wird und einer Kreislaufführung unterworfen wird.

9. Vorrichtung zur Reinigung von Grund- und Abwässern, dadurch gekennzeichnet, dass die Vorrichtung aus einer biologischen Reinigungsstufe, einer Mikrofiltrationseinheit und einer Aktivkohleadsorption bestehend ist, wobei die einzelnen Vorrichtungen auch mehrfach z.B. parallel oder in Reihe ausgeführt sein können